(19) Europäisches Patentamt
European Patent Office
Office européen des brevets

(11) **EP 3 286 885 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(21) Anmeldenummer: **16710671.5**

(22) Anmeldetag: **22.01.2016**

(51) Int Cl.:
*H04L 12/801* (2013.01)   *H04L 12/803* (2013.01)

(86) Internationale Anmeldenummer:
**PCT/DE2016/100025**

(87) Internationale Veröffentlichungsnummer:
**WO 2016/169550 (27.10.2016 Gazette 2016/43)**

(54) **VERFAHREN ZUR VERGABE VON TIMESLOTS**

METHOD FOR ALLOCATING TIME SLOTS

PROCÉDÉ D'ALLOCATION D'INTERVALLES DE TEMPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2015 DE 102015106205**

(43) Veröffentlichungstag der Anmeldung:
**28.02.2018 Patentblatt 2018/09**

(73) Patentinhaber: **Wiesemann & Theis GmbH 42279 Wuppertal (DE)**

(72) Erfinder: **LINDHORST, Simon 42929 Wermelskirchen (DE)**

(74) Vertreter: **Schulte & Schulte Patentanwälte Hauptstraße 2 45219 Essen (DE)**

(56) Entgegenhaltungen:
**EP-A2- 1 720 269     US-A1- 2006 268 813
US-A1- 2012 303 788     US-A1- 2012 320 812**

**Beschreibung**

Die Erfindung betrifft ein Verfahren zur Übertragung von Datenpaketen in einem eine Mehrzahl von Knoten aufweisenden drahtlosen vermaschten Netz, wobei jeder Kommunikationsrelation zwischen den Knoten ein fester Zeitschlitz mit einer Ordnungszahl zugewiesen wird und die Kommunikationsrelationen in der Reihenfolge dieser Ordnungszahlen durchgeführt werden, wobei jedem Zeitschlitz ein korrespondierender Zeitschlitz zugewiesen wird, in dem Sender und Empfänger vertauscht sind, wobei die Zuweisung des korrespondierenden Zeitschlitzes nach der Maßgabe erfolgt, dass der jeweils nächst niedrigen Ordnungszahl für einen Zeitschlitz die jeweils nächst hohe Ordnungszahl für den korrespondierenden Zeitschlitz zugewiesen wird.

Außerdem betrifft die Erfindung ein drahtloses vermaschtes Netz mit einer Mehrzahl von Knoten für die Übertragung von Datenpaketen zur Durchführung eines solchen Verfahrens, wobei jeder Kommunikationsrelation zwischen den Knoten ein fester Zeitschlitz mit einer Ordnungszahl zugewiesen ist und die Kommunikationsrelationen in der Reihenfolge dieser Ordnungszahlen durchgeführt werden.

Bei vermaschten oder auch Mesh-Funknetzen dienen Netzwerkknoten nicht nur als Endpunkte, z. B. als Messwertaufnehmer, sondern zugleich dazu, die Daten anderer Knoten weiterreichen bzw. routen zu können. Auf diese Weise wird die Reichweite des Netzwerkes über die Funkreichweite des einzelnen Knotens hinaus erweitert. Bekannt sind solche Lösungen etwa aus der DE 10 2009 052 573 oder der DE 10 2010 033 928. Bei der Inbetriebnahme eines solchen Netzes erhält jede Kommunikationsrelation einen festen Zeitschlitz (Timeslot), innerhalb einer übergeordneten Timeslotperiode. Es gibt bei der Funkkommunikation in vermaschten Netzen stets nur eine einzige Kombination zu einer Zeit. Bei bisher bekannten Lösungen erfolgt die Zuweisung der Timeslots während der selbstgesteuerten Inbetriebnahme des Netzwerkes unter Inkaufnahme von Zeitverzögerungen in nicht zufrieden stellender Geschwindigkeit und unter unzureichender Ausnutzung der Netzgeometrie. Aus der US 2006/268813 ist ein Verfahren zur Übertragung von Datenpaketen in einem eine Mehrzahl von Knoten aufweisenden drahtlosen Netz bekannt. Auch die Kommunikationsrelationen werden in der Reihenfolge der Ordnungszahlen durchgeführt, wobei jedem Zeitschlitz ein korrespondierender Zeitschlitz zugewiesen wird, in dem Sender und Empfänger vertauscht sind. Die US 2006/268813 betrifft auch ein Zeitschlitzverfahren, die Zeitschlitze werden allerdings so verteilt, dass nicht gleichzeitig gesendet und empfangen werden kann. Um das zu erreichen, wird ein bestimmter Algorhythmus zugrunde gelegt, welcher jedoch in der US 2006/268813 nicht definiert ist. Die US 2006/268813 bezieht sich auf Fälle, in denen Zeitschlitze benutzt werden, die eine bestimmte Ordnung haben und bei denen die Rolle von Sender und Empfänger in einer bestimmten Weise vertauscht sind. Zielsetzung bei dem Verfahren nach US 2006/268813 ist es, möglichst viele Verbindungen gleichzeitig verarbeiten bzw. halten zu können.

Die mit der vorliegenden Erfindung zu lösende Aufgabe kann darin gesehen werden, wie die Anordnung der Zeitschlitze vorteilhaft zu wählen ist.

Verfahrensgemäß wird diese Aufgabe dadurch gelöst, dass bei der Inbetriebnahme des Netzes die Zuweisung der Zeitschlitze in Abhängigkeit von der Entfernung zu dem jeweiligen Masterknoten durchgeführt wird, wobei in einem ersten Schritt die Zeitschlitze zu den direkt mit dem Masterknoten kommunizierenden Slaveknoten und in weiteren Schritten die Zeitschlitze zu den über weitere Slaveknoten mit den Masterknoten kommunizierenden Slaveknoten vergeben werden.

Es gilt, die vielen in einem solchen Netz denkbaren Kombinationen nacheinander auf effektive Weise in einer vorgegebenen und besonders zweckmäßigen Reihenfolge zu genau festgelegten Zeitpunkten abzuarbeiten. Dabei wird jedem Zeitschlitz ein korrespondierender oder auch Parallelzeitschlitz zugewiesen, indem Sender und Empfänger vertauscht sind. Zeitschlitz und korrespondierender Zeitschlitz werden dann so aufeinander abgestimmt, dass der jeweils niedrigsten Ordnungszahl für einen Zeitschlitz die jeweils höchste Ordnungszahl für den korrespondierenden Zeitschlitz zugewiesen wird. Dank dieser erfindungsgemäßen Nummerierung können sämtliche Kommunikationsschritte in einem einzigen Zyklus abgewickelt werden. Die erfindungsgemäße Schaltungsreihenfolge stellt dabei sicher, dass die ersten Kommunikationsrelationen auf dem Hinweg vom Master- in Richtung Slaveknoten den letzten auf dem Rückweg entsprechen und dass sich dazwischen gewissermaßen gespiegelte Paare ausbilden. Einem niedrigeren Zeitschlitz wird ein höherer paralleler Zeitschlitz zugewiesen, einem höheren Zeitschlitz ein vergleichsweise niedriger paralleler Zeitschlitz. Die Reihenfolge der einzelnen Datenpakete entspricht genau der Nummerierung, wobei die Paare aus Zeitschlitz und korrespondierendem Zeitschlitz in vorteilhafter Weise so aufeinander abgestimmt sind, dass eben die Geometrie des Netzes berücksichtigt bzw. optimal ausgenutzt wird.

Es ist vorgesehen, dass bei der Inbetriebnahme des Netzes die Zuweisung der Zeitschlitze in Abhängigkeit von der Entfernung zu dem jeweiligen Masterknoten durchgeführt wird. Dies ist insofern von Bedeutung, als die Entfernung zu dem jeweiligen Masterknoten bzw. die Anzahl und Anordnung der weiteren Slaveknoten zwischen dem betreffenden Slaveknoten und dem Masterknoten für die Nummerierung der Knoten und damit zur Festlegung der Abwicklung der Kommunikationsrelationen von maßgeblicher Bedeutung ist.

Konkret sieht dies so aus, dass bei der Inbetriebnahme des Netzes in einem ersten Schritt die Zeitschlitze zu den direkt mit dem Masterknoten kommunizierenden Slaveknoten vergeben werden. Die dem Master- am nächsten liegenden Slaveknoten erhalten folglich auch die niedrigsten Ordnungszahlen, sodass sie beim Senden vom Masterknoten in das Netz als erste abgearbeitet werden. Wesentlich wichtiger ist in Hinblick auf die Vorgabe der Geschwindigkeitsreduzierung allerdings dann, dass bei der Vergabe der Nummerierung in Richtung Master diese Kommunikationsrelationen in unmittelbarer Nähe zum Masterknoten die höchsten Ordnungszahlen aufweisen, sodass diese Datenverbindungen eben erst als letzte im Rahmen des Zyklus abgearbeitet werden, nachdem die dazwischen liegenden Knoten passiert sind.

Ergänzend hierzu ist vorgesehen, dass bei der Inbetriebnahme des Netzes in weiteren Schritten die Zeitschlitze zu den über weitere Slaveknoten mit dem Masterknoten kommunizierende Slaveknoten vergeben werden. Je mehr Slaveknoten sich zwischen dem Masterknoten und dem neuen Knoten befinden, desto weiter ist naturgemäß der Abstand zwischen neuem Knoten und Masterknoten. Insofern gilt der Grundsatz, dass die Nummerierung der Kommunikationsrelation auf dem Hinweg vom Masterknoten weg mit steigender Entfernung von dem Masterknoten höher wird, während auf dem Rückweg vom Masterknoten aus betrachtet zunächst die weiter abliegenden Kommunikationsrelationen durchnummeriert werden, bis die letzte Verbindung auf dem Rückweg, nämlich die zwischen dem sich in unmittelbarer Nähe des Masterknoten befindenden Slaveknoten und dem Masterknoten selbst durchnummeriert ist. Von einem Masterknoten ausgehend werden also zuerst die dem Masterknoten naheliegenden Knoten erkannt und nummeriert, erst danach die weiter abliegenden Knoten. Die tatsächliche Verteilung der Nummern ergibt sich also dann sowohl aus der Reihenfolge des Erkennens wie dem Algorithmus des Nummerngenerators.

In der Natur von vermaschten Funknetzen liegt es, dass stets von Knoten zu Knoten kommuniziert wird, beispielsweise können keine Knoten übergangen werden. Die Reihenfolge ergibt sich dabei so, dass eine Kommunikationsrelation, die auf dem Hinweg vom Master- zu den Slaveknoten eine möglichst kleine Ordnungszahl zugewiesen bekommen hat, auf dem Rückweg eine möglichst hohe zugewiesen bekommt. Für Kommunikationsrelationen mit hohen Ordnungszahlen auf dem Hinweg hingegen wird die Zuordnung zu einem Paralleltimeslot mit einer vergleichsweise niedrigen Ordnungszahl angestrebt. Diese Festlegung führt zu einer schnellen und ungestörten Kommunikation in beide Richtungen. In diesem Sinne wird vorgeschlagen, dass die Zuweisung von Zeitschlitz und korrespondierendem Zeitschlitz nach der Formel

$$\text{Ordnungszahl korrespondierender Zeitschlitz} =$$

$$\text{Anzahl der Zeitschlitze pro Zeitschlitzperiode} +1 - \text{Ordnungszahl Zeitschlitz}$$

durchgeführt wird.

Es empfiehlt sich, wenn die Zuweisung der Zeitschlitze im Rahmen der schrittweisen selbstgesteuerten Inbetriebnahme des Netzwerkes durchgeführt wird. Die Nummerierung wird beim Aufbau des Netzes zugewiesen, sobald jeweils ein neuer Knoten von den anderen Teilnehmern erkannt wurde.

Die erfindungsgemäße Aufgabe wird in Bezug auf das Netz dadurch gelöst, dass jedem Zeitschlitz ein korrespondierender Zeitschlitz zugewiesen ist, in dem Sender und Empfänger vertauscht sind, wobei die Zuweisung des korrespondierenden Zeitschlitzes nach der Maßgabe erfolgt, dass der jeweils niedrigsten Ordnungszahl für einen Zeitschlitz die jeweils höchste Ordnungszahl für den korrespondierenden Zeitschlitz zugewiesen ist.

Die Zuordnung der Zeitschlitze (Timeslots) führt dazu, dass ein Datenpakt idealerweise nur eine Timeslotperiode, die dem Durchlauf aller einzelnen Timeslots entspricht, benötigt, um an sein Ziel zu kommen und zwar unabhängig davon, in welche Richtung der Datenfluss erfolgt. Maßgeblich für das Verfahren ist, dass speziell das Senden in Richtung Master auf dem Rückweg wesentlich schneller abläuft, als dies beim Stand der Technik der Fall war.

Die Erfindung zeichnet sich insbesondere dadurch aus, dass ein Verfahren zur Übertragung von Datenpaketen sowie ein vermaschtes Netz geschaffen ist, die eine maßgebliche Optimierung der zeitlichen Verteilung in solch einem Netz ermöglichen. Die Geometrie eines Mesh-Netzes wird optimal ausgenutzt. Verfahrensgemäß wird jedem Zeitschlitz ein korrespondierender oder Parallelzeitschlitz mit vertauschtem Verhältnis Sender/Empfänger zugewiesen. Paarweise ergibt sich dann für eine jeweilige Kommunikationsrelation zwischen den Knoten, dass der nächst niedrigen Ordnungszahl für einen Zeitschlitz die jeweils nächst hohe Ordnungszahl für den korrespondierenden oder Parallelzeitschlitz zugewiesen wird. Diese Nummerierung ist insofern vorteilhaft, da alle Kommunikationsschritte in einem einzigen Zyklus abgewickelt werden können, wobei sich die tatsächliche Verteilung der Nummern aus der Reihenfolge des Erkennens der Knoten wie dem Algorithmus des Nummerngenerators ergibt. Bei nur einer vertauschten Nummerierung muss ansonsten bis zum nächsten Zyklus gewartet werden, bevor die Kommunikation fortgesetzt werden kann. Sind gleich mehrere der Nummerierungen vertauscht und sind noch mehr Zwischenstationen beteiligt, würde sich die verlorene Zeit noch erheblich erhöhen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Figur 1    eine tabellarische Aufstellung der Nummerierung und

Figur 2    ein Funktionsschema.

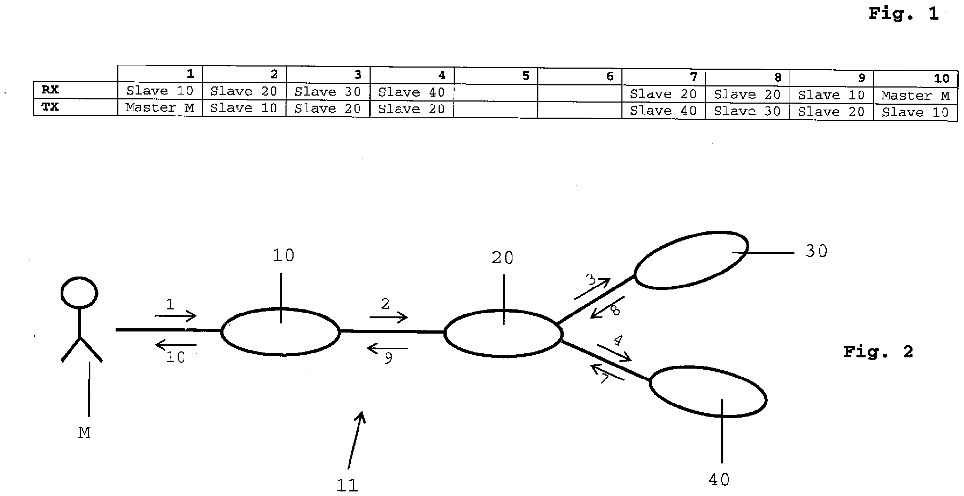

Figur 1 bezieht sich auf die tabellarische Wiedergabe der Nummerierung für die einzelnen Kommunikationsrelationen. Die obere Zeile entspricht dabei den in diesem Ausführungsbeispiel zehn Timeslots á 10 ms pro Timeslotperiode. In der zweiten Zeile, mit RX gekennzeichnet, finden sich die Knoten bzgl. der Kommunikationsrelationen auf dem Hinweg vom Masterknoten in Richtung Netz und in der unteren Zeile für den Rückweg vom Netz bzw. von den Slave- zu den Masterknoten. Der Masterknoten wird mit M, die Slaveknoten mit den Bezugszeichen 15-40 markiert. Paare bilden sich in der Tabelle gem. Figur 1 gem. dem erfindungsgemäßen Algorithmus von außen nach innen, d. h. unter Bezug auf die Ordnungszahlen die Paare 1 und 10, 2 und 9, 3 und 8, sowie 4 und 7. Jeder Timeslot ist also fest mit einem korrespondierenden Zeitschlitz gekoppelt, dazu muss die Anzahl der Timeslots gerade sein.

Zur Erläuterung der erfindungsgemäßen Formel anhand diese Ausführungsbeispiels: Sei n die Zahl dieser Timeslots für diese Timeslotperiode, so ist hier n=10. Der zum Zeitschlitz i gehörende Zeitschlitz findet sich aus n-i+1. Ist n also =10, so ist der korrespondierende Timeslot zu dem zweiten Zeitschlitz 10-2+1, also der neunte Zeitschlitz gem. Tabelle in Figur 1.

Dazu zeigt Figur 2 ein Funktionsschema. Ausgehend von dem Masterknoten M erfolgt die Durchnummerierung zu den Slaveknoten 15, 20, 30, 40. Das Datennetz 11 umfasst daneben Kommunikationsrelationen, die mit den Bezugszeichen 1-4 und 7-10 versehen sind. Paarweise bilden sich dabei in dem dem Master M am nächsten positionierten Abschnitt die Kommunikationsrelationen 1 für den Hin- und 10 für den Rückweg. Aufgrund der Nähe zum Masterknoten M erfolgt diese Nummerierung beim Aufbau des Netzes als erstes. Es schließt sich die Verbindung zwischen den beiden Slaveknoten 15 und 20 mit den Kommunikationsrelationen 2 und 9 an, die in einem zweiten Schritt nummeriert werden, weil es an dem direkten Kontakt zwischen Master M und Slaveknoten 20 fehlt. Schließlich stehen die Slaveknoten 20 und 30 über die Kommunikationsrelationen 3 und 8 und die Slaveknoten 20 und 40 über die Kommunikationsrelationen 4 und 7 in Kontakt. Diese Nummerierung erfolgt in Bezug auf Figur 2 als letzte, da der Abstand zum Masterknoten M der größte ist.

**Patentansprüche**

1.  Verfahren zur Übertragung von Datenpaketen in einem eine Mehrzahl von Knoten aufweisenden drahtlosen vermaschten Netz, wobei jeder Kommunikationsrelation zwischen den Knoten ein fester Zeitschlitz mit einer Ordnungszahl zugewiesen wird und die Kommunikationsrelationen in der Reihenfolge dieser Ordnungszahlen durchgeführt werden, wobei jedem Zeitschlitz ein korrespondierender Zeitschlitz zugewiesen wird, in dem Sender und Empfänger vertauscht sind, wobei die Zuweisung des korrespondierenden Zeitschlitzes nach der Maßgabe erfolgt, dass der jeweils nächst niedrigen Ordnungszahl für einen Zeitschlitz die jeweils nächst hohe Ordnungszahl für den korrespondierenden Zeitschlitz zugewiesen wird,
    **dadurch gekennzeichnet,**
    **dass** bei der Inbetriebnahme des Netzes die Zuweisung der Zeitschlitze in Abhängigkeit von der Entfernung zu dem jeweiligen Masterknoten durchgeführt wird, wobei in einem ersten Schritt die Zeitschlitze zu den direkt mit dem Masterknoten kommunizierenden Slaveknoten und in weiteren Schritten die Zeitschlitze zu den über weitere Slaveknoten mit dem Masterknoten kommunizierende Slaveknoten vergeben werden.

2.  Verfahren nach Anspruch 1,
    **dadurch gekennzeichnet,**
    **dass** die Zuweisung von Zeitschlitz und korrespondierendem Zeitschlitz nach der Formel

    $$\text{Ordnungszahl korrespondierender Zeitschlitz} =$$

    $$\text{Anzahl der Zeitschlitze pro Zeitschlitzperiode } +1 - \text{Ordnungszahl Zeitschlitz}$$

    durchgeführt wird.

3.  Verfahren nach Anspruch 1,
    **dadurch gekennzeichnet,**
    **dass** die Zuweisung der Zeitschlitze im Rahmen der schrittweisen selbstgesteuerten Inbetriebnahme des Netzwerkes durchgeführt wird.

4. Drahtloses vermaschtes Netz (11) mit einer Mehrzahl von Knoten (15, 20, 30, 40) für die Übertragung von Datenpaketen zur Durchführung des Verfahrens nach mindestens einem der Patentansprüche 1 - 3, wobei jeder Kommunikationsrelation (1 - 4 sowie 7 - 10) zwischen den Knoten (15, 20, 30, 40) ein fester Zeitschlitz mit einer Ordnungszahl zugewiesen ist und die Kommunikationsrelationen in der Reihenfolge dieser Ordnungszahlen durchgeführt werden,
   **dadurch gekennzeichnet,**
   **dass** jedem Zeitschlitz (1 - 4) ein korrespondierender Zeitschlitz (7 - 10) zugewiesen ist, in dem Sender und Empfänger vertauscht sind, wobei die Zuweisung des korrespondierenden Zeitschlitzes (7 - 10) nach der Maßgabe erfolgt, dass der jeweils niedrigsten Ordnungszahl für einen Zeitschlitz (1 - 4) die jeweils höchste Ordnungszahl für den korrespondierenden Zeitschlitz (7 - 10) zugewiesen ist.

5. Drahtloses vermaschtes Netz nach Anspruch 4,
   **dadurch gekennzeichnet,**
   **dass** die Zuweisung von Zeitschlitz (1 - 4) und korrespondierendem Zeitschlitz (7 - 10) nach der Formel

$$\text{Ordnungszahl korrespondierender Zeitschlitz} =$$

$$\text{Anzahl der Zeitschlitze pro Zeitschlitzperiode} + 1 - \text{Ordnungszahl Zeitschlitz}$$

erfolgt.

**Claims**

1. Method for transmitting data packets in a wireless interconnected network having a plurality of nodes, wherein a fixed time slot with an ordinal number is assigned to each communication relation between the nodes and the communication relations are performed in the order of the said ordinal numbers, whereby each time slot is assigned a corresponding time slot in which transmitter and receiver are exchanged, whereby the corresponding time slot is assigned in accordance with the stipulation that the next higher ordinal number for the corresponding time slot is assigned to the next lower time slot,
   **characterised in that**
   when the network starts up assignment of the time slots is carried out in dependence on the distance to the respective master node, whereby in a first step time slots are assigned to the slave nodes communicating with the master node and in further steps time slots are assigned to the slave nodes communicating with the master node through other slave nodes.

2. Method in accordance with claim 1,
   **characterised in that**
   that assignment of the time slots and corresponding time slots is carried out in accordance with the equation

$$\text{Ordinal number of the corresponding time slot} =$$

$$\text{Number of time slots per time slot period} + 1 - \text{Ordinal number for the time slot}$$

3. Method in accordance with claim 1,
   **characterised in that**
   assignment of the time slots is carried out in the framework of the step-by-step self-controlled start-up of the network.

4. Wireless interconnected network (11) having a plurality of nodes (15, 20, 30, 40) for transmitting data packets for carrying out a method in accordance with at least one of patent claims 1 - 3, wherein a fixed time slot with an ordinal number is assigned to each communication relation (1 - 4 and 7 - 10) between the nodes (15, 20, 30, 40) and the communication relations are performed in the order of the said ordinal numbers,
   **characterised in that**
   each time slot (1 - 4) is assigned a corresponding time slot (7 - 10) in which transmitter and receiver are exchanged, whereby the assignment of the corresponding time slot (7 - 10) is carried out in accordance with the principle that in each case the next higher ordinal number for the corresponding time slot (7 - 10) is assigned to the next lower ordinal number for a time slot (1 - 4).

**5.** Wireless interconnected network in accordance with claim 4,
**characterised in that**
that assignment of the time slots (1 - 4) and corresponding time slots (7 - 10) is carried out in accordance with the equation

$$\text{Ordinal number of the corresponding time slot} =$$

$$\text{Number of time slots per time slot period} +1 - \text{Ordinal number for the time slot}$$

**Revendications**

**1.** Procédé destiné à transmettre des paquets de données dans un réseau maillé sans fil présentant un grand nombre de noeuds, sachant que chaque relation de communication entre les noeuds se voit attribuer un multiplexage temporel fixe avec un numéro d'ordre et que les relations de communication sont exécutées dans l'ordre de cette numérotation, sachant que chaque multiplexage temporel se voit attribuer un multiplexage temporel correspondant dans lequel l'émetteur et le récepteur sont intervertis, sachant que l'attribution du multiplexage temporel correspondant s'effectue selon le principe en vertu duquel chaque plus petit numéro d'ordre suivant se voit attribuer à chaque fois à titre de multiplexage temporel le numéro d'ordre plus élevé suivant pour le multiplexage temporel correspondant,
**caractérisé par le fait**
**que** lors de la mise en service du réseau, l'attribution des multiplexages temporels est effectuée en fonction de l'éloignement par rapport au noeud maître respectif, sachant que, dans une première étape, les multiplexages temporels sont attribués aux noeuds esclaves communiquant directement avec le noeud maître, et que dans les étapes suivantes, les multiplexages temporels sont attribués aux noeuds esclaves communiquant avec le noeud maître par l'intermédiaire d'autres noeuds esclaves.

**2.** Procédé selon la revendication 1,
**caractérisé par le fait**
**que** l'attribution d'un multiplexage temporel et d'un multiplexage temporel correspondant est effectuée d'après la formule

$$\text{Numéro d'ordre du multiplexage temporel correspondant} =$$

$$\text{Nombre des multiplexages temporels par période de multiplexage temporel} +1 -$$

$$\text{Numéro d'ordre multiplexage temporel.}$$

**3.** Procédé selon la revendication 1,
**caractérisé par le fait**
**que** l'attribution des multiplexages temporels s'effectue dans le cadre de la mise en service autopilotée du réseau par étape.

**4.** Réseau maillé sans fil (11) avec un grand nombre de noeuds (15, 20, 30, 40) pour la transmission de paquets de données pour exécuter le procédé d'après au moins une des revendications du brevet 1 - 3, sachant que chaque relation de communication (1 - 4 et 7 - 10) entre les noeuds (15, 20, 30, 40) se voit attribuer un multiplexage temporel fixe avec un numéro d'ordre et que les relations de communication sont exécutées dans l'ordre de cette numérotation,
**caractérisé par le fait**
**que** chaque multiplexage temporel (1 - 4) se voit attribuer un multiplexage temporel correspondant (7 - 10) dans lequel l'émetteur et le récepteur sont intervertis, sachant que l'attribution du multiplexage temporel correspondant (7 - 10) s'effectue selon le principe en vertu duquel chaque plus petit numéro d'ordre pour un multiplexage temporel (1 - 4) se voit attribuer à chaque fois à titre de multiplexage temporel le numéro d'ordre plus élevé suivant pour le multiplexage temporel correspondant (7 - 10).

**5.** Réseau maillé sans fil selon la revendication 4,
**caractérisé par le fait**
**que** l'attribution du multiplexage temporel (1 - 4) et du multiplexage temporel correspondant (7 - 10) est effectuée d'après la formule

<div align="center">

Numéro d'ordre du multiplexage temporel correspondant =

Nombre des multiplexages temporels par période de multiplexage temporel +1 −

Numéro d'ordre multiplexage temporel.

</div>

EP 3 286 885 B1

**Fig. 1**

| | 1 | 2 | 3 | 4 | 5 | 6 | 7 | 8 | 9 | 10 |
|---|---|---|---|---|---|---|---|---|---|---|
| RX | Slave 10 | Slave 20 | Slave 30 | Slave 40 | | | Slave 20 | Slave 20 | Slave 10 | Master M |
| TX | Master M | Slave 10 | Slave 20 | Slave 20 | | | Slave 40 | Slave 30 | Slave 20 | Slave 10 |

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009052573
- DE 102010033928
- US 2006268813 A